Europäisches Patentamt

European Patent Office

Office européen des brevets

(19)

(11) EP 0 838 938 A1

(12) DEMANDE DE BREVET EUROPEEN

(43) Date de publication:
29.04.1998 Bulletin 1998/18

(51) Int Cl.6: H04M 17/00, H04M 1/274

(21) Numéro de dépôt: 97401761.8

(22) Date de dépôt: 22.07.1997

(84) Etats contractants désignés:
AT BE CH DE DK ES FI FR GB GR IE IT LI LU MC NL PT SE
Etats d'extension désignés:
AL LT LV RO SI

(30) Priorité: 24.07.1996 FR 9609293

(71) Demandeur: FRANCE TELECOM
75015 Paris (FR)

(72) Inventeurs:
• Abou Hassan, Salman
14000 Caen (FR)
• Achemlal, Mohammed
14000 Caen (FR)

(74) Mandataire: Dubois-Chabert, Guy et al
Société de Protection des Inventions
25, rue de Ponthieu
75008 Paris (FR)

(54) **Procédé de paiement de communications téléphoniques au moyen d'un numéroteur automatique**

(57) Procédé de paiement de communications téléphoniques par débit d'un compte géré par un centre serveur accessible à partir de tous types de postes téléphoniques (2). Ce procédé consiste, lors du premier paiement, à mémoriser, dans un numéroteur multifréquence (1), un numéro d'appel du centre serveur (NAS) et un numéro d'identification de l'utilisateur (NIU), une pluralité de numéros d'appel des correspondants de l'utilisateur (NAC) pouvant avoir été mémorisés au préalable dans ledit numéroteur. Il consiste ensuite, pour chaque paiement suivant, à utiliser ce numéroteur pour composer automatiquement les numéros permettant d'accéder au centre serveur.

Application en téléphonie.

*FIG.2*

0₁ : Mem(NAS,NIU)

0₂ : comp(NAS,NIU,NAC)

EP 0 838 938 A1

## Description

Domaine technique

L'invention concerne un procédé pour payer des communications téléphoniques au moyen d'un numéroteur automatique. En particulier, elle concerne les procédés de paiement de communications téléphoniques par débit d'un compte géré par un centre serveur accessible à partir de tous types de téléphones.

L'invention trouve des applications dans le domaine de la téléphonie et, en particulier, pour le paiement de communications téléphoniques à partir d'un poste téléphonique public.

Etat de la technique

Dans le domaine des communications téléphoniques, il est connu d'utiliser des cartes de paiement pour payer les communications téléphoniques effectuées à partir d'un poste téléphonique public. Il existe actuellement deux grandes familles de cartes téléphoniques :

-   la carte à crédit qui est nominative et nécessite un code secret ; cette carte à crédit n'a pas de valeur intrinsèque, puisqu'elle est jumelée avec un compte bancaire ou un compte téléphonique dont la facturation est faite en différé ;
-   la carte à débit qui est anonyme et dont la valeur correspond généralement à la valeur faciale indiquée sur le recto de la carte, et qui correspond à un certain nombre d'unités téléphoniques. Cette carte a un prix fixe et peut être utilisée en une ou plusieurs fois, jusqu'à épuisement de son crédit en unités téléphoniques. Cette carte n'est pas rechargeable et son coût de revient est faible.

Parmi ces cartes à débit, appelées également « télécartes », on en distingue deux sortes :

*   la télécarte dite « à valeur stockée » dont la valeur est stockée sur la carte elle-même au moyen d'une puce électronique, d'une bande magnétique ou d'une piste optique. La lecture d'une telle télécarte à valeur stockée se fait au moyen d'un lecteur adapté au type de moyen de mémorisation (puce, bande magnétique, etc.) ; ce lecteur lit la valeur restante (c'est-à-dire le nombre d'unités non-consommées) avant d'établir la communication, puis en fin de communication, décrémente de cette valeur restante le nombre d'unités consommées durant la communication. Dans ce cas, c'est donc le lecteur de carte, commandé par un système de gestion, qui effectue la vérification de la validité de la télécarte ; par exemple, il vérifie l'origine de cette carte ; il vérifie également si cette carte n'est pas frauduleuse et si la valeur restante n'est pas épuisée. Une telle télécarte à valeur stockée a l'avantage, d'une part, d'être facile à utiliser pour l'utilisateur et, d'autre part, d'être simple à gérer par l'opérateur qui les émet. Cependant, elle nécessite l'utilisation d'un lecteur adapté, destiné à lire son contenu et dont l'installation est onéreuse.

*   La télécarte dite « virtuelle », dont la valeur est stockée sur un compte géré par un serveur. Pour chaque télécarte virtuelle, il correspond un numéro de compte sur le serveur. Ce compte est provisionné de la valeur indiquée sur la face de la télécarte et il est débité, à chaque communication, du nombre d'unités consommées durant la communication. Lorsque le crédit en unités est épuisé, le compte est fermé définitivement.

Il existe également plusieurs types de télécartes virtuelles. Les plus fréquentes sont les télécartes virtuelles à puce avec ou sans contact. Ces télécartes sont fabriquées avec des technologies identiques à celles des cartes à mémoire et leur usage est très simple et ergonomique. Le numéro d'immatriculation de la carte est enregistré dans la puce de la télécarte. Aussi, le fonctionnement de cette télécarte est complètement transparent pour l'utilisateur qui a simplement à décrocher le combiné et à introduire sa télécarte dans le lecteur. La télécarte déclenche alors un appel vers le centre serveur qui renvoie, à l'utilisateur, un message vocal d'information concernant le crédit restant sur sa télécarte. Si le crédit n'est pas épuisé, l'utilisateur peut alors composer le numéro de son correspondant ; sinon, la ligne est coupée.

Cependant, cette télécarte virtuelle à puce a l'inconvénient de nécessiter un lecteur de cartes, ce qui est relativement coûteux ; en outre, la fabrication d'une télécarte à puce a un coût de revient relativement important.

Les télécartes virtuelles les moins coûteuses sont les télécartes imprimées qui servent simplement de support pour le numéro d'identification de la carte. Ces télécartes peuvent être utilisées à partir de tout poste téléphonique à fréquence vocale. Elles ne nécessitent donc nullement l'emploi d'un lecteur de cartes spécifique. Cependant, pour utiliser une telle télécarte, l'utilisateur doit tout d'abord composer un numéro téléphonique permettant d'accéder au serveur qui centralise les comptes des télécartes. Ensuite, l'utilisateur doit composer le numéro d'identification de sa télécarte, qui est inscrit sur la télécarte elle-même, puis, si le compte qui correspond à la télécarte n'est pas fermé, c'est-à-dire si le crédit n'est pas épuisé, l'utilisateur accède à une ligne téléphonique et peut alors composer le numéro du correspondant qu'il désire appeler. Cependant, il faut savoir que le numéro d'identification de la carte comporte, en général, au moins 10 chiffres décimaux. De même, le numéro d'appel du serveur comporte 8 à 10 chiffres. De ce fait, l'utilisateur doit composer environ 18 à 20 chiffres sur le clavier du téléphone avant de pouvoir composer le numéro du correspondant qu'il désire appeler. Cette télécarte est donc très peu ergonomique, puisqu'il y a de grands risques de se tromper dans un ou plusieurs chiffres, au moment où l'utilisateur tape les chiffres sur le clavier téléphonique.

En outre, de telles télécartes ne peuvent être émises qu'en nombre relativement limité. En effet, le numéro d'identification de la carte est codé sur un certain nombre de bits auquel il faut ajouter des bits de redondance pour assurer au système une certaine sécurité afin de limiter les fraudes. Or, le nombre de bits total utilisé généralement pour coder le numéro d'identification de la carte et assurer la redondance est 33. Or, si la redondance utilise 5 bits, ce qui est vraiment le minimum pour assurer une sécurité moyenne, cela signifie que le numéro d'identification de la carte ne peut être codé que sur 28 bits (soit un numéro d'identification de 10 chiffres décimaux), ce qui représente un nombre de $2^{28} = 268\ 435\ 456$ télécartes qui peuvent être émises. Cependant, la consommation en télécartes par an, pour la France, est de l'ordre de 120 millions. En conséquence, pour permettre d'augmenter le nombre de télécartes pouvant être émises et, éventuellement, le nombre de bits servant à la redondance ; il est nécessaire d'augmenter le nombre de chiffres constituant le numéro d'identification de carte, ce qui se fait au dépend de l'ergonomie de la télécarte.

## Exposé de l'invention

L'invention a justement pour but de remédier aux inconvénients des différents procédés de paiements de communications téléphoniques décrits précédemment. A cette fin, elle propose un procédé pour payer les communications téléphoniques par débit d'un compte géré par un centre serveur en utilisant un numéroteur dans lequel sont mémorisés le numéro d'accès au serveur, ainsi que le numéro d'identification de la carte, appelé aussi numéro d'identification de l'utilisateur.

De façon plus précise, l'invention concerne un procédé de paiement de communications téléphoniques par débit d'un compte géré par un centre serveur accessible à partir de tous types de postes téléphoniques. Ce procédé se caractérise par le fait qu'il consiste, lors du premier paiement, à mémoriser, dans un numéroteur multifréquence, un numéro d'appel du centre serveur et un numéro d'identification de l'utilisateur, une pluralité de numéros d'appels des correspondants de l'utilisateur ayant été mémorisés au préalable dans ledit numéroteur. Il consiste ensuite, pour chaque paiement suivant, à utiliser ce numéroteur pour composer automatiquement les numéros permettant d'accéder au centre serveur.

Avantageusement, le numéro d'identification de l'utilisateur comporte un premier et un second numéros concaténés.

Selon un mode de réalisation de l'invention, le second numéro est le résultat d'un cryptage du premier numéro par une fonction de chiffrement cryptographique.

que.

## Brève description des figures

- Les figures 1A, 1B et 1C représentent trois modes de réalisation de numéroteurs pouvant être utilisés pour mettre en oeuvre le procédé de l'invention ; et
- la figure 2 représente schématiquement le diagramme fonctionnel du procédé selon l'invention.

## Exposé détaillé de modes de réalisation de l'invention

L'invention concerne un procédé ergonomique pour payer les communications téléphoniques par débit d'un compte géré par un centre serveur accessible à partir de tous types de postes téléphoniques. Ce procédé consiste en l'utilisation d'un numéroteur de type courant, qui permet de mémoriser un certain nombre de numéros et, en particulier, des numéros d'appels téléphoniques et de transmettre ces numéros au poste téléphonique.

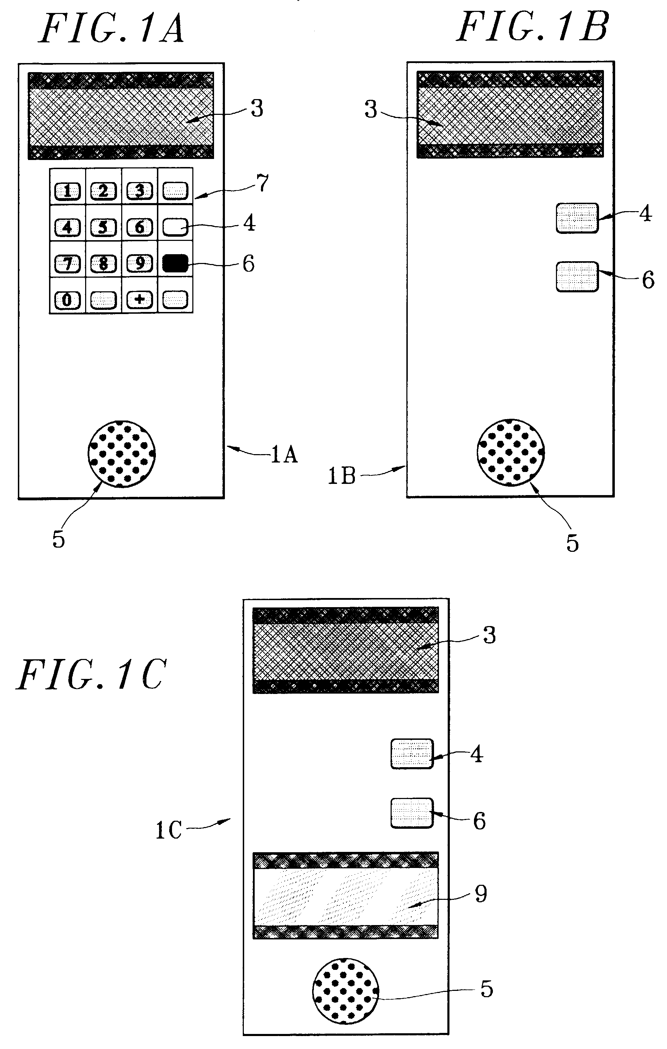

Actuellement, les numéroteurs multifréquence sont des produits très courants sur le marché. Il en existe plusieurs types qui seront décrits ci-après. Le numéroteur DTMF (Dual Tone Multifrequencies, en termes anglo-saxons, ou multifréquences en terme français) le plus classique est celui représenté sur la figure 1A. Ce numéroteur 1A comporte un afficheur 3 sur lequel sont affichés les numéros au fur et à mesure qu'ils sont entrés dans le numéroteur afin d'y être mémorisés ; cet afficheur 3 permet également à l'utilisateur de visualiser les numéros choisis au moment de l'appel téléphonique. Ce numéroteur 1A comporte en outre un microphone 5 qui retransmet au combiné téléphonique le ou les numéro(s) à composer. Ce numéroteur 1A a pour particularité de comporter un miniclavier 7 muni de touches de 0 à 9 permettant de composer les numéros à mémoriser dans le numéroteur. Ce miniclavier 7 comporte de plus une touche d'enregistrement 4 et une touche de composition automatique 6. La touche d'enregistrement est utilisée au moment où l'utilisateur veut entrer ses données dans la mémoire du numéroteur ; la touche de composition automatique 6 est utilisée au moment où l'utilisateur veut composer le numéro de son correspondant, choisi dans la mémoire du numéroteur.

Sur la figure 1B, on a représenté un autre type de numéroteur. Ce numéroteur 1B comporte, tout comme le numéroteur 1A, un afficheur 3 et un microphone 5. Il comporte également des touches d'enregistrement 4 et de composition automatique 6. Par contre, ce numéroteur a la particularité d'être un numéroteur à reconnaissance vocale, c'est-à-dire que l'entrée dans la mémoire du numéroteur des numéros se fait en épelant, devant le microphone 5 du numéroteur, chaque chiffre composant les numéros à mémoriser, à savoir le numéro d'appel du serveur et le numéro d'identification d'utilisateur. Dans ce numéroteur, un logiciel de reconnaissance vocale de la parole est intégré et assure la mémorisation des numéros.

Sur la figure 1C, on a représenté un autre type de numéroteur présent sur le marché. Il s'agit d'un numéroteur à reconnaissance de chiffres ou de codes barres. Ce numéroteur 1C comporte, tout comme les numéroteurs précédents, un afficheur 3 ainsi qu'un microphone 5. Il comporte également une touche d'enregistrement 4 et une touche de composition automatique 6. La particularité de ce numéroteur 1C est qu'il comporte un scanner, référencé 9, qui assure la lecture des chiffres ou des codes barres que l'utilisateur aura placés devant lui. Un logiciel de reconnaissance de chiffres, intégré au numéroteur, permet de reconnaître et mémoriser les chiffres entrés par l'utilisateur.

Un exemple de numéroteur multifréquence à reconnaissance de codes barres est décrit par exemple dans le document JP-61 64696 (abrégé) de HITACHI LTD.

Le procédé selon l'invention consiste à utiliser un tel numéroteur pour composer les numéros permettant d'accéder au serveur gérant les comptes téléphoniques. Plus précisément, ce procédé consiste avant d'effectuer le premier paiement de communication, à introduire dans la mémoire du numéroteur multifréquence, le numéro d'appel du centre serveur, ainsi que le numéro d'identification de l'utilisateur. Ces numéros sont introduits de la même façon que tous les numéros d'appels des différents correspondants de l'utilisateur, au moyen du clavier, du microphone ou du scanner, selon le type de numéroteur utilisé.

Le procédé de l'invention consiste ensuite, à chaque fois que l'utilisateur veut payer une communication téléphonique à partir de son compte géré par le serveur, à utiliser ce numéroteur pour composer automatiquement le numéro d'appel du centre serveur, puis le numéro d'identification de l'utilisateur.

Ainsi, du point de vue pratique, lorsque l'utilisateur veut téléphoner, il place le microphone du numéroteur sur le combiné et appuie sur un bouton dédié (touche de composition 6) pour déclencher la composition automatique en multifréquence du numéro d'appel au serveur et du numéro d'identification de l'utilisateur. Il peut ensuite soit composer le numéro de son correspondant, soit utiliser son numéroteur pour composer automatiquement le numéro du correspondant qu'il désire appeler.

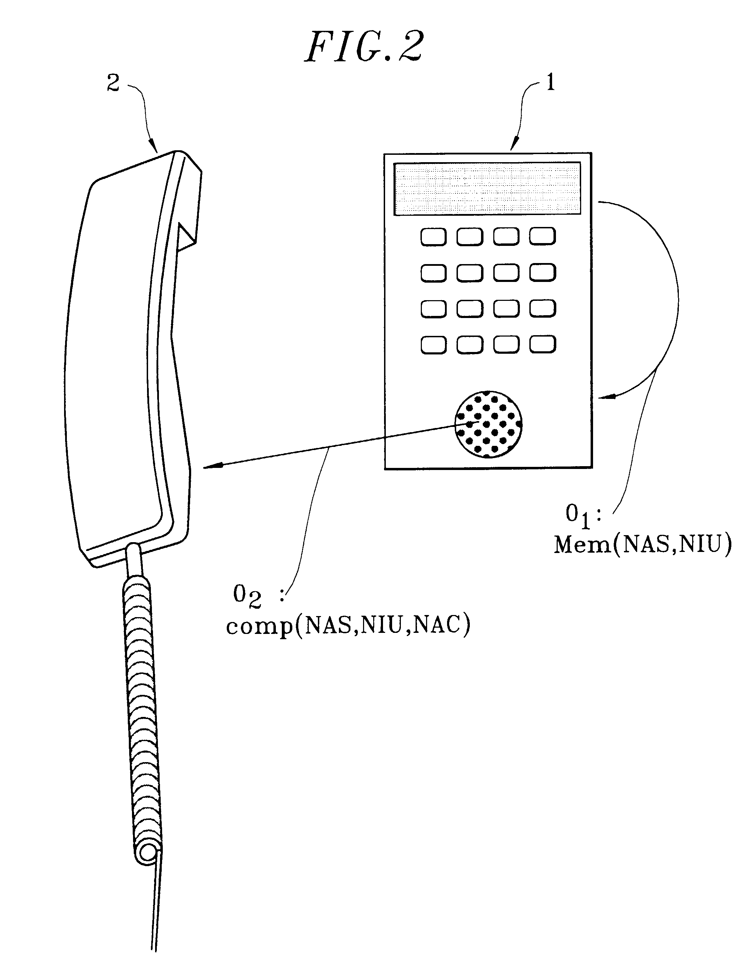

Sur la figure 2, on a représenté schématiquement un numéroteur 1 et un poste téléphonique 2. Une flèche $O_1$ représente l'opération de mémorisation, à l'intérieur du numéroteur, du numéro d'accès au centre serveur et du numéro d'identification de l'utilisateur. Cette opération est notée Mem (NAS, NIU) sur la figure 2, où NAS est le numéro d'accès au serveur et NIU, le numéro d'identification de l'utilisateur. On a représenté par une flèche $O_2$ l'opération de composition automatique du numéro d'appel serveur, du numéro d'identification de l'utilisateur et du numéro d'appel du correspondant. Cette opération est notée comp (NAS, NIU, NAC), où NAC est le numéro d'appel du correspondant.

Avantageusement, le numéro d'identification de l'utilisateur comporte un premier et un second numéros concaténés NIC1 et NIC2. Selon un mode de réalisation de l'invention, NIC1 peut représenter le numéro de série unique d'une télécarte et NIC2 est le numéro d'authentification de la carte.

Selon un mode de réalisation de l'invention, le numéro NIC2 est le résultat d'un cryptage du premier numéro NIC1 par une fonction de chiffrement cryptographique. Autrement dit, NIC2 est une fonction de NIC1. On a donc :

$$NIC2 = f_k(NIC1),$$

où f est une fonction de chiffrement cryptographique qui peut être soit secrète, soit publique. Par exemple, f peut être une fonction de chiffrement cryptographique publique, telle que l'algorithme d'encryptage connu sous le nom DES. k est une clé secrète connue uniquement par l'émetteur de la télécarte ; elle peut être différente d'un lot de cartes à un autre. Ainsi, seul l'émetteur de la carte est capable de calculer NIC2 qui est une fonction de NIC1.

Le procédé selon l'invention permet ainsi d'éviter tous les risques de faux numéros lorsque l'utilisateur tape le numéro d'appel au serveur, puis son numéro d'identification d'utilisateur. C'est donc un procédé particulièrement ergonomique. De plus, ce procédé permet à l'utilisateur, dès que le serveur lui a donné la ligne, de composer automatiquement le numéro d'appel de son correspondant au moyen du numéroteur. Ceci évite donc à l'utilisateur de devoir, chaque fois qu'il veut téléphoner, utiliser d'abord une carte de télépaiement, puis ensuite son numéroteur pour composer le numéro du correspondant.

Selon un mode de réalisation de l'invention, un tel numéroteur multifréquence peut faire partie intégrante d'un organisateur électronique, du type répertoire téléphonique électronique qui permet de concaténer le numéro d'appel d'un correspondant issu du répertoire avec le numéro d'identification de l'utilisateur, ainsi que le numéro d'appel du serveur et de composer ces trois numéros en série.

**Revendications**

1. Procédé de paiement de communications téléphoniques par débit d'un compte géré par un centre serveur accessible à partir de tous types de postes téléphoniques (2), caractérisé en ce qu'il consiste, lors du premier paiement, à mémoriser, dans un numéroteur multifréquence (1), un numéro d'appel du centre serveur (NAS) et un numéro d'identification de l'utilisateur (NIU) tel qu'un numéro d'identification d'une télécarte virtuelle, une pluralité de numéros d'appel des correspondants de l'utilisateur (NAC) ayant été mémorisés au préalable dans ledit numéroteur, puis, pour chaque paiement suivant, à utiliser ce numéroteur pour composer automatiquement les numéros permettant d'accéder au centre serveur.

2. Procédé de paiement selon la revendication 1, caractérisé en ce que le numéro d'identification de l'utilisateur comporte un premier et un second numéros concaténés (NIC1, NIC2).

3. Procédé de paiement selon la revendication 2, caractérisé en ce que le second numéro est le résultat d'un cryptage du premier numéro par une fonction de chiffrement cryptographique ($f_k$).

# FIG.1A

# FIG.1B

# FIG.1C

# FIG.2

$0_1:$
Mem(NAS,NIU)

$0_2:$
comp(NAS,NIU,NAC)

**Office européen des brevets**

## RAPPORT DE RECHERCHE EUROPEENNE

Numéro de la demande

EP 97 40 1761

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| Y | US 5 455 857 A (MCGUIRE) | 1 | H04M17/00 |
| A | * le document en entier * | 2,3 | H04M1/274 |
| Y | US 4 706 275 A (KAMIL) | 1 | |
| A | * le document en entier * | 2,3 | |
| A | WO 95 34161 A (CALL PROCESSING, INC.) * abrégé * | 1-3 | |
| A | WO 96 05683 A (AUSTEL LICENSING GMBH) * abrégé * | 1-3 | |
| A | EP 0 480 833 A (FRANCE TELECOM) * abrégé * | 1-3 | |

**DOMAINES TECHNIQUES RECHERCHES (Int.Cl.6)**

H04M

Le présent rapport a été établi pour toutes les revendications

| Lieu de la recherche | Date d'achèvement de la recherche | Examinateur |
|---|---|---|
| LA HAYE | 23 février 1998 | Montalbano, F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03 82 (P04C02)